# EUROPEAN PATENT SPECIFICATION

(11) **EP 1 137 536 B1**
(45) Date of publication and mention of the grant of the patent: **19.03.2003**
(21) Application number: 99956295.2
(22) Date of filing: 30.11.1999
(51) Int. Cl.: B32B 27/12, B65D 90/04

(54) **TANK LINING**
AUSKLEIDUNG FÜR TANKS
REVETEMENT POUR RESERVOIR

(30) Priority: 01.12.1998 IE 980996
(43) Date of publication of application: 04.10.2001
(73) Proprietor: New Lake International Limited, Balbriggan, County Dublin (IE)
(72) Inventor: Fitzgerald, Fergus Rupert, Malahide, County Dublin (IE)
(74) Representative: O'Brien, John Augustine
(86) International application number: IE9900121
(87) International publication number: WO00032394

(56) References cited:
- EP-A- 0 014 491
- CH-A- 548 837
- CH-A- 686 722
- DE-A- 2 623 289
- FR-A- 2 391 834
- FR-A- 2 733 489
- GB-A- 2 164 293
- US-A- 4 662 959
- DATABASE WPI Section Ch, Week 198304 Derwent Publications Ltd., London, GB; Class A21, AN 1983-08739K XP002132052 & JP 57 203544 A (KUBOTA LTD), 13 December 1982 (1982-12-13)
- PATENT ABSTRACTS OF JAPAN vol. 018, no. 025 (M-1542), 14 January 1994 (1994-01-14) & JP 05 261858 A (NIPPON STEEL CORP), 12 October 1993 (1993-10-12)

## Description

### Introduction

The invention relates to a method for lining a storage tank, especially underground storage tanks for petroleum products and chemicals generally.

Storage tanks are widely installed underground for a range of different uses. One of the most widely used tanks of this type are underground storage tanks installed at petroleum products facilities such as filling stations. Generally, such tanks are of steel and degrade over time leading to leakages. Valuable product is lost through such leakages however, more importantly serious environmental problems result with leakages into the water table and the like. Damaged tanks therefore cause serious environmental problems. In addition, the replacement of such tanks is extremely expensive as major excavation work is required to remove and replace the tank. In the case of a filling station there are also major costs involved in closure of the station while lengthy works are carried out. In addition, in the event of closure it is often the case that an even more expensive station reconstruction is carried out to attract back customers who have moved to other stations while the work is being carried out. This leads to yet further costs.

There is therefore a need for tank lining system which will at least alleviate some of these serious problems. This invention is directed towards providing such a tank lining system.

### Statements of the Invention

According to the invention there is provided a method of lining a storage tank comprising the steps of: -
providing a keying means on the inner surface of the tank;
applying a corrosion barrier coating to the keying means;
applying an interstitial grid to the tank;
laying up a pliable glass reinforced plastics material onto the grid; and
exposing the glass reinforced plastics material to ultra violet rays to cure the material and form a hardened inner liner shell for the tank.

In a preferred embodiment of the invention the interstitial grid is provided by pre-formed sheets of flexible material.

Preferably the grid is bonded, typically adhesively to the corrosion barrier coating.

Ideally the grid has a facing material applied to receive the glass reinforced plastics material. Preferably the facing is a polyester mat bonded to the grid, typically to one side of the grid.

In a preferred arrangement the grid is of a plastics material. In one case the grid is of high density polyethylene material.

In another embodiment at least portion of the grid is of a composite material.

In a further embodiment at least portion of the grid is of a mesh material. The mesh may be a metal mesh such as an aluminium mesh.

Preferably, for lining, the tank is divided into a number of zones, which are separately lined.

In this case preferably the final zone to be lined is adjacent a manway into the tank.

In one embodiment of the invention the sheets of pliable glass reinforced plastics material are applied to the grid in sections, the marginal edges of the sections being butt jointed. In this case preferably, the joints between adjacent sheets are covered with a GRP tape.

In one embodiment of the invention the method includes the step of: -
applying a coating to the hardened GRP liner.

Preferably the keying means is provided by grit blasting the inner surface of the tank.

In one embodiment of the invention the method includes the step of: -
cleaning the inner surface of the tank prior to providing the keying means.

In a preferred embodiment the inner surface is cleaned by water jet cleaning.

Preferably the corrosion barrier is a glassflake epoxy resin.

Preferably the corrosion barrier layer is applied to a dry film thickness of greater than 1000 microns.

In one embodiment of the invention the method includes the steps, prior to application of a corrosion layer of: -
inspecting the internal wall of the tank; and
repairing any imperfections in the tank wall.

Preferably the GRP is exposed to UV by directing UV lamps at the GRP layer.

In a preferred arrangement the GRP material is covered with an outer protective film which is removed to expose the GRP material to UV. Preferably the coating is a glassflake epoxy resin.

In one embodiment of the invention the tank is an underground liquid storage tank.

Preferably the method includes the step of controlling the environment in the tank, during lining.

In a preferred embodiment of the invention the temperature within the tank is maintained at a minimum target temperature of 15°C.

Preferably the relative humidity is maintained at less than 80% during lining. Ideally the relative humidity is maintained at from 50% to 60%.

The invention also provides a tank whenever lined by a method of the invention.

In a preferred aspect the invention provides a tank having a tank wall, keying means on the inner surface of the tank wall, a corrosion barrier coating applied to the keying means, an interstitial grid applied to the tank, UV cured glass fibre reinforced material laid onto the grid forming a hardened inner liner shell for the tank.

Preferably the tank includes a leak monitoring transducer in the interstitial space defined by the grid. Alternatively or additionally the tank includes a vapour monitoring means in the interstitial space. The vapour monitoring means generally includes a vapour sampling tube.

In a preferred embodiment the tank includes an alarm means associated with the monitoring means. The alarm is preferably mounted remote from the tank.

### Brief Description of Drawings

The invention will be more clearly understood from the following description thereof given by way of example only with reference to the accompanying drawings, in which: -
Fig. 1 is a perspective partially cut-away view of a typical tank to be lined using the method of the invention;
Fig. 2 is a perspective partially cross sectional view of a tank lined by the method of the invention;
Fig. 3 is a perspective view of an interstitial grid used in the invention;
Fig. 3a is a cross sectional view on the line A-A in Fig. 3;
Fig. 4 is a diagrammatic cross section view of the tank being lined;
Fig. 5 is a diagrammatic perspective view illustrating a joint used in the lining procedure;
Fig. 5a is a partial cross sectional view of the joint illustrated in Fig. 5; and

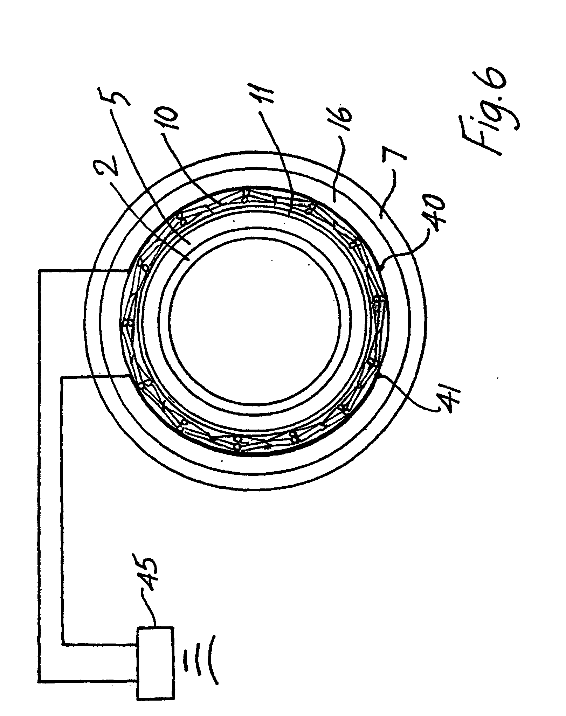

Fig. 6 is a diagrammatic transverse cross sectional view of the lined tank in use.

### Detailed Description

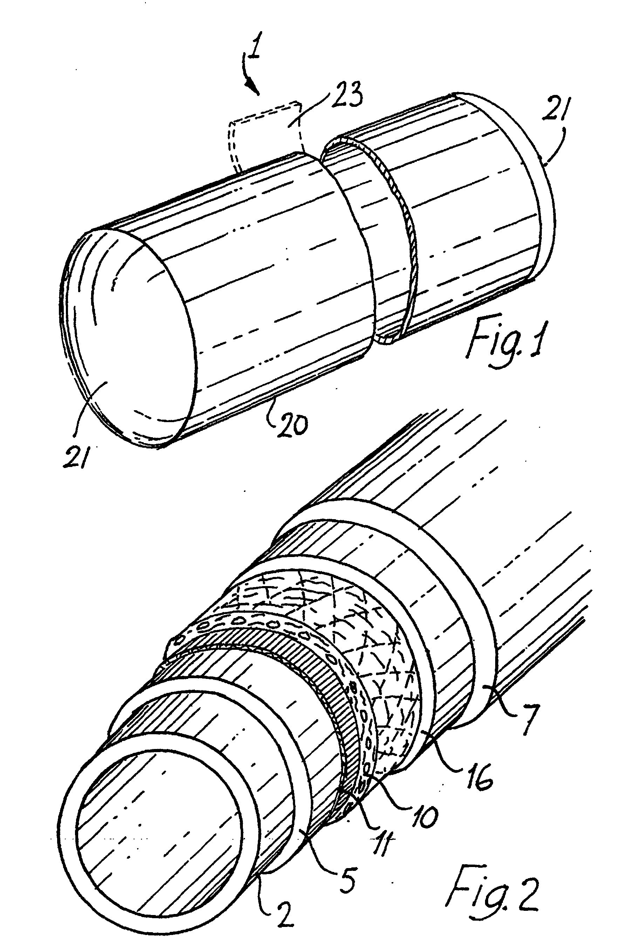

Referring to the drawings there is illustrated in Fig. 1 a typical underground tank 1 for storage of petroleum products and chemicals generally. The tank 1 may, for example, be an underground petroleum products storage tank located at a service or filling station and comprises a main cylindrical body 20 with domed ends 21. The tank 1 typically has a generally centrally disposed manway 23.

The storage tank 1 is lined in situ by accessing the tank 1 through the manway 23. The inner surface 7 of the tank wall is first cleaned using water jetting to remove scale, rust and surface contaminants. The tank internal wall is then inspected to ascertain any leak areas or perforations. A full inspection of the tank is carried out using an ultrasonic wall thickness gauge to establish any internal/external corrosion patterns. Any resultant defects are repaired using an epoxy filler. Where necessary the striker plate, which is a steel plate below the manway 23, is removed. Weld spatters, laminations etc may be removed by grinding.

A keying means is then provided on the inner surface 7 of the tank 1. This is achieved by grit blasting using re-usable chilled iron grit.

A corrosion barrier coating 16 is then applied to the keying means. The coating 16 is a glassflake epoxy resin which is applied to a minimum dry film thickness of 1000 microns, typically using airless spray equipment. On completion of the corrosion barrier the integrity of the barrier is tested to identify any pinholes on the lining substrate.

An adhesive is applied to the corrosion barrier coating 16. Sheets of high density polyethylene (HDPE) interstitial grid 10 are bonded to an adhesive applied to the coating 16, forming an air gap which is typically about 5 mm. The grid 10 has a polyester mat 11 bonded to one side and the grid 10 is installed with the mat 11 facing into the tank.

The grid 10 may be of any suitable mouldable/flexible material capable of substantially following the contours of the tank to be lined. The grid may be of a metallic mesh such as an aluminium mesh. The grid may also be of a suitable composite material. It may also be coated. Different grids may be applied at different locations. The construction of the grids provides an interstitial space between the inner and outer walls of the lined tank in which any vapour and/or liquid leakage is retained and detected.

A pliable glass reinforced plastics layer, preferably of GRP material is applied to the grid. The GRP is an ultra violet (UV) light curable material in a sheet form. A matrix of isophthalic resin, e-type glass reinforcement, inert fillers and a photoinitiator is sandwiched between two nylon films. The nylon films minimise emissions and facilitate handling and shaping. A further protective film to protect against daylight exposure is provided.

The GRP material has a styrene content of approximately 6% which substantially reduces emissions of volatile organics from the product. One such material is available under the brand Fibertech from Pomona International Limited trading as Fibertech of Ireland.

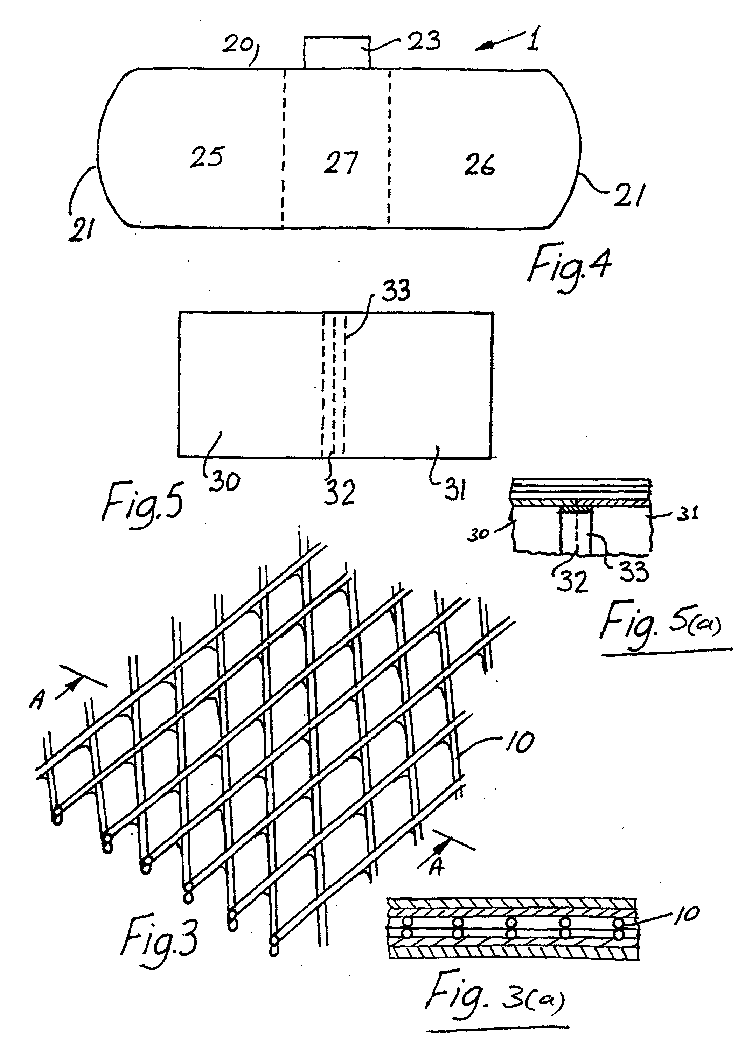

The GRP material is first cut to size from a roll. The inner protective film is removed and the GRP is applied to the prepared surface. The GRP material is smoothed and moulded to form an internal tank shell. Adjacent sheets 30, 31 of the GRP material is preferably butt jointed as illustrated in Fig. 5 and the joint 32 is covered by a tape of the same GRP material.

The outer UV protective layer is then removed from the GRP layer which is exposed to UV rays to cure the material and to form a hardened inner liner shell for the tank. In the case of an underground tank the GRP material is exposed to high powered UV lamps until it has fully cured resulting in a strong impermeable and hygienic shell within the tank 1. The curing time is generally a maximum of 60 minutes and is usually less than 30 minutes.

To assist uniform adhesion of the GRP material to the grid 10 an internal pressure is generally applied to the tank during curing. The applied pressure is typically 2 bar.

For efficient and safe lining of the tank, the tank is lined in three separate stages. Referring to Fig. 4, for lining, the tank is divided into three zones 25, 26, 27, two 25, 26 at the ends 21 and one 27 between the end zones 25 and 26 and adjacent the manway 23. In the lining procedure the first zone 25 is first lined as described above. The vessel tank is evacuated through the manway 23 for curing this zone 25. This procedure is repeated for the second zone 26. The mid-zone 27 is then lined and cured. This division of the tank into zones for lining optimises the lining procedure while ensuring safety of the lining operators

A suitable coating layer 2 may then be applied to the cured GRP layer 5. Preferably the barrier coating 2 is a glassflake epoxy which is applied to a minimum dry film thickness of 1000 microns using airless spray equipment.

An ultrasonic leak monitoring transducer 40 is installed in the interstitial space defined by the grid 10 at lower section of the tank. A vapour monitor sampling tube 41 is also installed in the interstitial space at the lower section of the tank.

All cables and the sampling tube are fed through a predrilled aperture, adjacent to the tank manway flange, the cables and sampling tube are bedded in Epoxy and shrouded with strips of the GRP material described above.

The transducer 40 and vapour monitor sampling tube 41 are connected to a control box 45, located in a designated safe area. An audible and/or visual alarm are connected to the control box 45. Should liquid or vapour be detected within the interstitial space a signal is sent to the control box 45 which will set off both audible and visual alarms. On the initiation of the alarm an auto-time counter will begin to record the detection period.

Conditions inside the tank are artificially controlled to maintain a target temperature (minimum) 15°C throughout the application. A relative humidity 50%-60% average (maximum 80%) is also maintained. On completion of various stages, temperature will be elevated to +30°C to accelerate cure.

Environmental readings are taken every four hours. These readings will consist of air temperature, surface temperature, percentage relative humidity and dew point. Results are recorded and monitored.

On completion of the lining the new tank shell is pressure tested in accordance with BS 4994 : 1987 Specification for design and construction of vessels and tanks in reinforced plastics.

The invention provides a method of tank lining which is extremely effective and efficient both in terms of material costs and installation costs.

Many variations on the specific embodiment of the invention will be readily apparent and accordingly the invention is not limited to the embodiments hereinbefore described which may be varied in construction and detail.

## Claims

1. A method of lining a storage tank (1) comprising the steps of: -
providing a keying means on the inner surface (7) of the tank;
applying a corrosion barrier coating (16) to the keying means;
applying an interstitial grid (10) to the tank;
laying up a pliable glass reinforced plastics material onto the grid; and
exposing the glass reinforced plastics material to ultra violet rays to cure the material and form a hardened inner liner shell for the tank.

2. A method as claimed in claim 1 wherein the interstitial grid (10) is provided by pre-formed sheets of flexible material.

3. A method as claimed in claim 1 or 2 wherein the grid (10) is adhesively bonded to the corrosion barrier coating (16).

4. A method as claimed in any preceding claim wherein the grid (10) has a facing material applied to receive the glass reinforced plastics material.

5. A method as claimed in claim 4 wherein the facing is a polyester mat (11) bonded to one side of the grid (10).

6. A method as claimed in any preceding claim wherein at least portion of the grid (10) is of a plastics material.

7. A method as claimed in any of claims 1 to 6 wherein at least portion of the grid (10) is of a composite material.

8. A method as claimed in any of claims 1 to 5 wherein at least portion of the grid (10) is of a mesh material.

9. A method as claimed in claim 8 wherein the mesh is a metal mesh.

10. A method as claimed in claim 9 wherein the mesh is an aluminium mesh.

11. A method as claimed in claim 6 wherein the grid (10) is of high density polyethylene material.

12. A method as claimed in any preceding claim wherein, for lining, the tank (1) is divided into a number of zones (25,26,27), which are separately lined.

13. A method as claimed in claim 12 wherein the final zone to be lined is adjacent a manway (23) into the tank.

14. A method as claimed in any of claims 2 to 13 wherein the sheets of pliable glass reinforced plastics material are applied to the grid in section, the marginal edges of the sections being butt jointed.

15. A method as claimed in claim 14 wherein the joints between adjacent sheets are covered with a GRP tape.

16. A method as claimed in any preceding claim including the step of: -
applying a coating to the hardened GRP liner.

17. A method as claimed in any preceding claim wherein the keying means is provided by grit blasting the inner surface of the tank.

18. A method as claimed in any preceding claim including the step of: -
cleaning the inner surface (7) of the tank (1) prior to providing the keying means.

19. A method as claimed in claim 18 wherein the inner surface (7) is cleaned by water jet cleaning.

20. A method as claimed in any preceding claim wherein the corrosion barrier is a glassflake epoxy resin.

21. A method as claimed in claim 20 wherein the corrosion barrier layer is applied to a dry film thickness of greater than 1000 microns.

22. A method as claimed in any preceding claim including the steps, prior to application of a corrosion layer of: -
inspecting the internal wall of the tank; and
repairing any imperfections in the tank wall.

23. A method as claimed in any preceding claim wherein the GRP is exposed to UV by directing UV lamps at the GRP layer.

24. A method as claimed in any preceding claim wherein the GRP material is covered with an outer protective film which is removed to expose the GRP material to UV.

25. A method as claimed in any of claims 16 to 24 wherein the GRP coating is a glassflake epoxy resin.

26. A method as claimed in any preceding claim wherein the tank is an underground liquid storage tank.

27. A tank whenever lined by a method as claimed in any preceding claim.

28. A tank as claimed in claim 27 having a tank wall, keying means on the inner surface (7) of the tank wall, a corrosion barrier coating (16) applied to the keying means, an interstitial grid (10) applied to the tank, UV cured glass fibre reinforced material laid onto the grid forming a hardened inner liner shell for the tank.

29. A tank as claimed in claim 27 or 28 including a leak monitoring transducer (40) in the interstitial space defined by the grid (10).

30. A tank as claimed in any of claims 27 to 29 including a vapour monitoring means in the interstitial space defined by the grid (10).

31. A tank as claimed in claim 30 wherein the vapour monitoring means includes a vapour sampling tube (41).

32. A tank as claimed in any of claims 29 to 31 including an alarm means associated with the monitoring means.

33. A tank as claimed in claim 32 wherein the alarm is mounted remote from the tank (1).

## Patentansprüche

1. Verfahren zum Auskleiden eines Lagertanks (1), das die folgenden Schritte umfasst,
Vorsehen eines Verkeilungsmittels auf der Innenfläche (7) des Tanks;
Aufbringen eines Korrosionssperrüberzugs (16) auf dem Verkeilungsmittel;
Anbringen eines Zwischengitters (10) an dem Tank;
Auflegen eines biegsamen glasverstärkten Kunststoffmaterials auf das Gitter; und
Aussetzen des glasverstärkten Kunststoffmaterials Ultraviolettstrahlen, um das Material auszuhärten und eine erhärtete innere Auskleidungsschale für den Tank zu bilden.

2. Verfahren nach Anspruch 1, bei dem das Zwischengitter (10) durch vorgefertigte Bahnen aus flexiblem Material vorgesehen wird.

3. Verfahren nach Anspruch 1 oder 2, bei dem das Gitter (10) durch Klebstoff an den Korrosionssperrüberzug (16) gebunden wird.

4. Verfahren nach einem vorhergehenden Anspruch, bei dem das Gitter (10) ein Verkleidungsmaterial umfasst, das zum Aufnehmen des glasverstärkten Kunststoffmaterials aufgebracht wird.

5. Verfahren nach Anspruch 4, bei dem die Verkleidung eine Polyestermatte (11) ist, die an eine Seite des Gitters (10) gebunden wird.

6. Verfahren nach einem vorhergehenden Anspruch, bei dem wenigstens ein Teil des Gitters (10) aus einem Kunststoffmaterial besteht.

7. Verfahren nach einem der Ansprüche 1 bis 6, bei dem wenigstens ein Teil des Gitters (10) aus einem Verbundmaterial besteht.

8. Verfahren nach einem der Ansprüche 1 bis 5, bei dem wenigstens ein Teil des Gitters (10) aus einem Siebmaterial besteht.

9. Verfahren nach Anspruch 8, bei dem das Sieb ein Metallsieb ist.

10. Verfahren nach Anspruch 9, bei dem das Sieb ein Aluminiumsieb ist.

11. Verfahren nach Anspruch 6, bei dem das Gitter (10) aus Polyethylenmaterial hoher Dichte besteht.

12. Verfahren nach einem vorhergehenden Anspruch, bei dem der Tank (1) für die Auskleidung in eine Anzahl von Zonen (25, 26, 27) unterteilt wird, die getrennt ausgekleidet werden.

13. Verfahren nach Anspruch 12, bei dem die letzte auszukleidende Zone an ein Einstiegsloch (23) in den Tank angrenzt.

14. Verfahren nach einem der Ansprüche 2 bis 13, bei dem die Bahnen aus biegsamem glasverstärktem Kunststoffmaterial abschnittsweise auf das Gitter aufgebracht werden, wobei die Außenkanten der Abschnitte stumpf aneinandergefügt werden.

15. Verfahren nach Anspruch 14, bei dem die Verbindungsstellen zwischen benachbarten Bahnen mit einem Glasfaserkunststoffband bedeckt werden.

16. Verfahren nach einem vorhergehenden Anspruch, das den Schritt umfasst:
Aufbringen eines Überzugs auf die erhärtete Glasfaserkunststoffauskleidung.

17. Verfahren nach einem vorhergehenden Anspruch, bei dem das Verkeilungsmittel durch Putzstrahlen der Innenfläche des Tanks vorgesehen wird.

18. Verfahren nach einem vorhergehenden Anspruch, das den Schritt umfasst:
Reinigen der Innenfläche (7) des Tanks (1) vor Vorsehen des Verkeilungsmittels.

19. Verfahren nach Anspruch 18, bei dem die Innenfläche (7) durch Wasserstrahlreinigung gereinigt wird.

20. Verfahren nach einem vorhergehenden Anspruch, bei dem die Korrosionssperre ein Glasflocken-Epoxidharz ist.

21. Verfahren nach Anspruch 20, bei dem die Korrosionssperrschicht bis zu einer trockenen Filmdicke von mehr als 1000 Mikron aufgebracht wird.

22. Verfahren nach einem vorhergehenden Anspruch, das vor Aufbringung einer Korrosionsschicht die folgenden Schritte umfasst:
Inspizieren der Innenwand des Tanks; und
Reparieren jeglicher Mängel in der Tankwand.

23. Verfahren nach einem vorhergehenden Anspruch, bei dem der Glasfaserkunststoff UV-Strahlung durch Richten von UV-Lampen auf die Glasfaserkunststoffschicht ausgesetzt wird.

24. Verfahren nach einem vorhergehenden Anspruch, bei dem das Glasfaserkunststoffmaterial mit einem äußeren Schutzfilm bedeckt ist, der entfernt wird, um das Glasfaserkunststoffmaterial UV-Strahlung auszusetzen.

25. Verfahren nach einem der Ansprüche 16 bis 24, bei dem der Glasfaserkunststoffüberzug ein Glasflocken-Epoxidharz ist.

26. Verfahren nach einem vorhergehenden Anspruch, bei dem der Tank ein unterirdischer Flüssigkeitslagertank ist.

27. Tank, immer wenn ein solcher durch ein Verfahren nach einem vorhergehenden Anspruch ausgekleidet ist.

28. Tank nach Anspruch 27, der eine Tankwand, Verkeilungsmittel auf der Innenfläche (7) der Tankwand, einen Korrosionssperrüberzug (16) aufgebracht auf dem Verkeilungsmittel, ein Zwischengitter (10) angebracht an dem Tank, und UV-gehärtetes glasfaserverstärktes Material umfasst, das auf das Gitter gelegt wird, welches eine gehärtete innere Auskleidungsschale für den Tank bildet.

29. Tank nach Anspruch 27 oder 28, der einen Leckagekontrollmesswandler (40) in dem durch das Gitter (10) begrenzten Zwischenraum umfasst.

30. Tank nach einem der Ansprüche 27 bis 29, der ein Dampfkontrollmittel in dem durch das Gitter (10) begrenzten Zwischenraum umfasst.

31. Tank nach Anspruch 30, bei dem das Dampfkontrollmittel ein Dampfentnahmerohr (41) umfasst.

32. Tank nach einem der Ansprüche 29 bis 31, der ein Alarmnuttel verknüpft mit dem Kontrollmittel umfasst.

33. Tank nach Anspruch 32, bei dem der Alarm von dem Tank (1) entfernt angebracht ist.

## Revendications

1. Méthode pour garnir un réservoir de stockage (1) comprenant les étapes consistant à :
fournir un moyen d'accrochage sur la surface interne (7) du réservoir;
appliquer un revêtement de protection contre la corrosion (16) sur le moyen d'accrochage;
appliquer une grille interstitielle (10) au réservoir;
poser une matière en plastique renforcé à la fibre de verre pliable sur la grille; et
exposer la matière en plastique renforcé à la fibre de verre aux rayons ultraviolets pour durcir la matière et former une chemise de garnissage intérieur durcie pour le réservoir.

2. Méthode telle que revendiquée dans la revendication 1, dans laquelle la grille interstitielle (10) est fournie par des feuilles préformées en matière flexible.

3. Méthode telle que revendiquée dans la revendication 1 ou 2, dans laquelle la grille (10) est fixée de manière adhésive au revêtement de protection contre la corrosion (16).

4. Méthode telle que revendiquée dans l'une quelconque des revendications précédentes, dans laquelle la grille (10) a une matière de surfaçage appliquée pour recevoir la matière en plastique renforcé à la fibre de verre.

5. Méthode telle que revendiquée dans la revendication 4, dans laquelle le surfaçage est une natte en polyester (11) fixée à un côté de la grille (10).

6. Méthode telle que revendiquée dans l'une quelconque des revendications précédentes, dans laquelle une partie au moins de la grille (10) est en une matière en plastique.

7. Méthode telle que revendiquée dans l'une quelconque des revendications 1 à 6, dans laquelle une partie au moins de la grille (10) est en une matière composée.

8. Méthode telle que revendiquée dans l'une quelconque des revendications 1 à 5, dans laquelle une partie au moins de la grille (10) est en une matière en treillis.

9. Méthode telle que revendiquée dans la revendication 8, dans laquelle le treillis est un treillis métallique.

10. Méthode telle que revendiquée dans la revendication 9, dans laquelle le treillis est un treillis en aluminium,

11. Méthode telle que revendiquée dans la revendication 6, dans laquelle la grille (10) est en une matière de polyéthylène haute densité.

12. Méthode telle que revendiquée dans l'une quelconque des revendications précédentes, dans laquelle, pour le garnissage, le réservoir (1) est divisé en un nombre de zones (25, 26, 27), qui sont garnies séparément.

13. Méthode telle que revendiquée dans la revendication 12, dans laquelle la zone finale à garnir est adjacente à un trou d'homme (23) dans le réservoir.

14. Méthode telle que revendiquée dans l'une quelconque des revendications 2 à 13, dans laquelle les feuilles de matière en plastique renforcé à la fibre de verre pliable sont appliquées à la grille en sections, les bords marginaux des sections étant joints bout à bout.

15. Méthode telle que revendiquée dans la revendication 14, dans laquelle les joints entre des feuilles adjacentes sont recouverts avec un ruban en GRP.

16. Méthode telle que revendiquée dans l'une quelconque des revendications précédentes, comprenant l'étape consistant à :
appliquer un revêtement au garnissage en GRP durci.

17. Méthode telle que revendiquée dans l'une quelconque des revendications précédentes, dans laquelle le moyen d'accrochage est fourni en grenaillant la surface interne du réservoir.

18. Méthode telle que revendiquée dans l'une quelconque des revendications précédentes, comprenant l'étape consistant à :
nettoyer la surface interne (7) du réservoir (1) avant de fournir le moyen d'accrochage.

19. Méthode telle que revendiquée dans la revendication 18, dans laquelle la surface interne (7) est nettoyée par nettoyage au jet d'eau.

20. Méthode telle que revendiquée dans l'une quelconque des revendications précédentes, dans laquelle la protection contre la corrosion est une résine époxy à flocons de verre.

21. Méthode telle que revendiquée dans la revendication 20, dans laquelle la couche de protection contre la corrosion est appliquée jusqu'à une épaisseur de pellicule sèche de plus de 1000 microns.

22. Méthode telle que revendiquée dans l'une quelconque des revendications précédentes comprenant, préalablement à l'application d'une couche de corrosion, les étapes consistant à :
inspecter la paroi interne du réservoir, et
réparer toutes imperfections dans la paroi du réservoir.

23. Méthode telle que revendiquée dans l'une quelconque des revendications précédentes, dans laquelle le GRP est exposé aux UV en dirigeant des lampes UV sur la couche en GRP.

24. Méthode telle que revendiquée dans l'une quelconque des revendications précédentes, dans laquelle la matière en GRP est recouverte d'une pellicule de protection externe qui est retirée pour exposer la matière en GRP aux UV.

25. Méthode telle que revendiquée dans l'une quelconque des revendications 16 à 24, dans laquelle le revêtement en GRP est une résine époxy à flocons de verre.

26. Méthode telle que revendiquée dans l'une quelconque des revendications précédentes, dans laquelle le réservoir est un réservoir de stockage de liquide souterrain.

27. Réservoir, chaque fois que garni par une méthode telle que revendiquée dans l'une quelconque des revendications précédentes.

28. Réservoir tel que revendiqué dans la revendication 27, ayant une paroi de réservoir, un moyen d'accrochage sur la surface interne (7) de la paroi du réservoir, un revêtement de protection contre la corrosion (16) appliqué au moyen d'accrochage, une grille interstitielle (10) appliquée au réservoir, une matière en plastique renforcé à la fibre verre durcie aux UV, posée sur la grille, formant une chemise de garnissage intérieur durcie pour le réservoir.

29. Réservoir tel que revendiqué dans la revendication 27 ou 28, comprenant un transducteur de contrôle de fuite (40) dans l'espace interstitiel défini par la grille (10).

30. Réservoir tel que revendiqué dans l'une quelconque des revendications 27 à 29, comprenant un moyen de contrôle de vapeur dans l'espace interstitiel défini par la grille (10).

31. Réservoir tel que revendiqué dans la revendication 30, dans lequel le moyen de contrôle de vapeur comprend un tube d'échantillonnage de vapeur (41).

32. Réservoir tel que revendiqué dans l'une quelconque des revendications 29 à 31, comprenant un moyen d'alarme associé au moyen de contrôle.

33. Réservoir tel que revendiqué dans la revendication 32, dans lequel l'alarme est montée à l'écart du réservoir (1).
